# EUROPEAN PATENT SPECIFICATION

(11) **EP 3 399 200 B1**
(45) Date of publication and mention of the grant of the patent: **24.11.2021**
(21) Application number: 18152194.9
(22) Date of filing: 17.01.2018
(51) Int. Cl.: F16B 25/00

(54) **SCREW FOR THIN IRON SHEETS**
SCHRAUBE FÜR DÜNNE EISENBLECHE
VIS POUR FEUILLES DE FER MINCES

(30) Priority: 02.05.2017 TW 106114443
(43) Date of publication of application: 07.11.2018
(73) Proprietor: Hsu, Ming-Hao, 710 Tainan City (TW)
(72) Inventor: Hsu, Ming-Hao, 710 Tainan City (TW)
(74) Representative: Jannig & Repkow Patentanwälte PartG mbB

(56) References cited:
- EP-A1- 0 121 108
- EP-A1- 0 281 203
- EP-A1- 2 395 250
- WO-A1-2015/028661
- US-A- 4 194 430
- US-A- 6 065 919
- US-B1- 7 014 386

## Description

### BACKGROUND OF THE INVENTION

### 1. Field of the Invention

The present invention relates to a screw and, more particularly, to a self-tapping screw used to fasten thin iron sheets.

### 2. Description of the Related Art

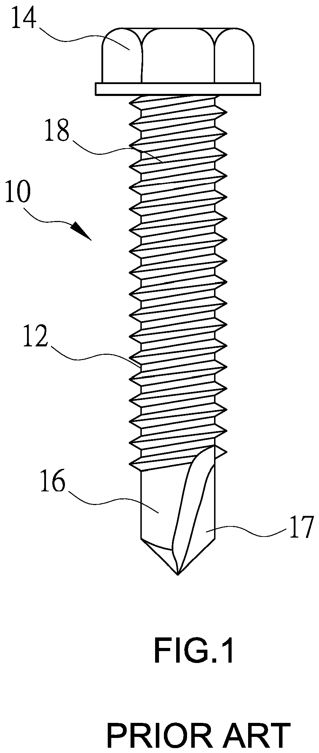

FIG. 1 illustrates a conventional self-tapping screw (self-drilling screw) 10 which is used to fasten thinner metal sheets (for example, thin iron sheets or thin steel sheets). The screw 10 includes a shank 12 and a head 14 on the top of the shank 12. A self-drilling portion 16 is formed on the bottom of the shank 12 and provided with cutting edges 17. The shank 12 with a circular cross section includes a thread 18 spiraling circumferentially between the self-drilling portion 16 and the head 14. When thin iron sheets are to be fastened and fixed by the screw 10, the self-drilling portion 16 should be driven into the thin iron sheets for hole expansion.

Despite the advantage of no pre-bored hole drilled in a thin iron sheet by the screw 10, iron filings are easily produced in the course of the self-drilling portion 16 driven into the thin iron sheet. Moreover, when the thread 18 is screwed into the thin iron sheet for hole expansion, a large gap usually occurs, which leads to other undesired phenomena including the thin iron sheet rusty and the fixed screw 10 shaken, thereby resulting in a insufficient clamping force between the screw 10 and the thin iron sheet.

Documents US 6065919, US 4194430, WO 2015/028661, EP 0281203, EP 0121108, US 7014386, and EP 2395250 are documents reflecting the relevant background art, wherein US 6065919 describes a self-tapping screw with an improved thread design as disclosed in the preamble of claim 1. These documents do, however, not provide a satisfactory solution of the above mentioned problems.

### BRIEF SUMMARY OF THE INVENTION

Thus, an objective of the present invention is to provide a screw which is to gradually drill a thin iron sheet in which the screw is being driven for generation of fewest crevices, better fastening force applied on the iron sheet by the screw, and no shaking of the screw.

To achieve this and other objectives, a screw of the present invention includes a shank, a first thread, and a second thread. The shank includes a straight rod portion and a tapered screw-in portion at a front end of the straight rod portion. The straight rod portion has substantially triangular cross sections, and the screw-in portion has a sharp-cone cross section with a tip. The first thread is spirally developed on an outer circumference of the shank and extends to the straight rod portion from the tip of the screw-in portion. The first thread includes a plurality of first thread convolutions. The second thread is spirally developed on the outer circumference of the shank and extends to the straight rod portion from the tip of the screw-in portion. The second thread includes a plurality of second thread convolutions spaced from the first thread convolutions of the first thread. The first and second threads are spaced apart from each other and correspondingly extend to the straight rod portion from the tip. The first and second threads have an identical anchor point at the tip of the screw-in portion. The screw-in portion is provided with at least five thread convolutions of the first and second thread convolutions, and the first and second thread convolutions on the screw-in portion have an identical thread height.

The screw which relies on the screw-in portion is smoothly driven into a thin iron sheet for no fracture on the thin iron sheet but generation of fewest crevices. Moreover, the screw features a strengthened tightening force applied on thin iron sheets for no shaking of the screw and fastening of the thin iron sheets.

In a preferred form, the screw-in portion features an included angle between 20 and 30 degrees. Each of the first and second thread convolutions features a crest angle between 48 and 52 degrees.

In a preferred form, the pitch of two adjacent second thread convolutions is almost equal to the pitch of two adjacent first thread convolutions, and a pitch of two adjacent first and second thread convolutions is defined to be between 0.68 and 0.72 mm.

The present invention will become clearer in light of the following detailed description of an illustrative embodiment of this invention described in connection with the drawings.

### DESCRIPTION OF THE DRAWINGS

The illustrative embodiment may best be described by reference to the accompanying drawings where:
FIG. 1 is a schematic view of a conventional self-tapping screw.
FIG. 2 is a perspective view of a screw in accordance with an embodiment of the present invention.
FIG. 3 is a front view of the screw of FIG. 2.
FIG. 4 is a sectional view taken along line 4-4 of FIG. 3.
FIG. 5 is a sectional view taken along line 5-5 of FIG. 3.
FIG. 6 is a partial, enlarged view of the screw of FIG. 4.

### DETAILED DESCRIPTION OF THE INVENTION

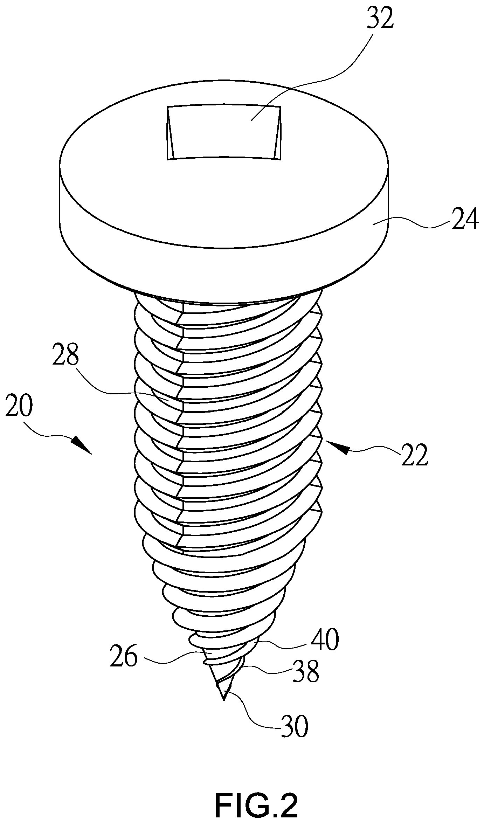

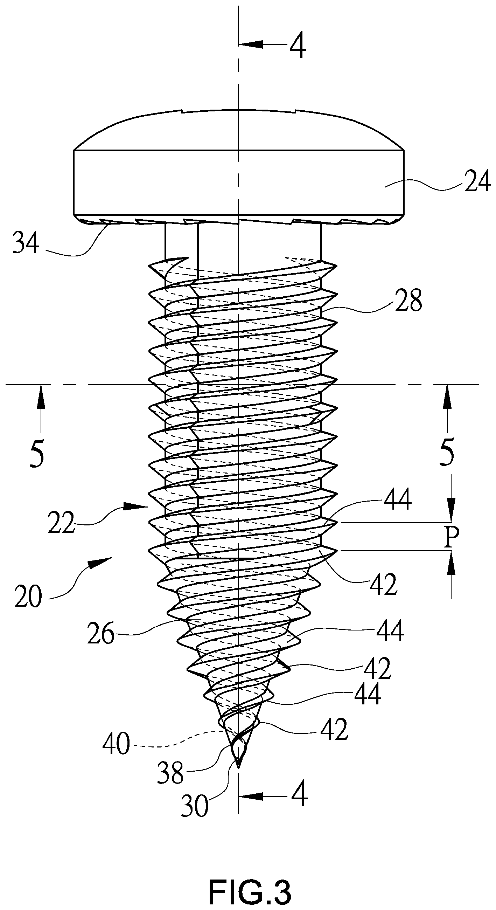

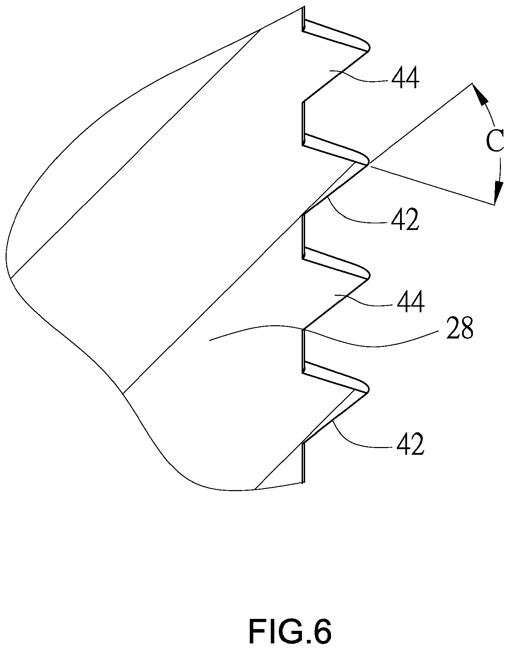

A screw according to the present invention is shown in FIGS. 2 through 6 of the drawings and generally designated 20. The screw 20 includes a shank 22 and a head 24 formed on the top of the shank 22. The shank 22 includes a screw-in portion 26 spaced from the head 24 along a longitudinal axis (X) of the shank 22 and a straight rod portion 28 between the head 24 and the screw-in portion 26. The screw-in portion 26 features a sharp-cone cross section with an included angle (A) between 20 and 30 degrees (26 degrees preferably). The screw-in portion 26 ending with a tip 30 has a longitudinal length (L) which is defined as the distance from the tip 30 to a bottom end of the straight rod portion 28. The head 24 with an outer diameter greater than a diameter of the shank 22 has a top surface at which a socket 32 on a Phillips head, square head, hexagonal head, Torx or others is cut such that a tool (not shown in figures) is accommodated for driving the screw 20 to rotate. Moreover, the head 24 is provided with a plurality of serrate portions 34 at a bottom thereof and is able to abut a surface of an article by fastening forces of the plurality of serrate portions 34.

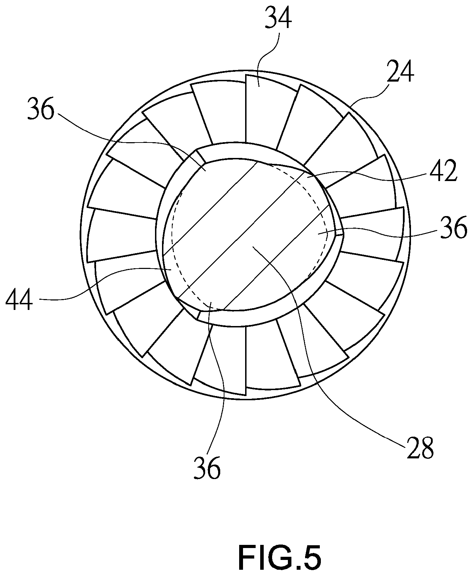

The straight rod portion 28 features non-circular cross sections. In this embodiment, the cross-section of the straight portion 28 is substantially triangular for development of three angles 36 which are spaced apart around a circumference of the straight rod portion 28 (see FIG. 5). In feasible embodiments, which are not part of the claimed invention, the straight rod portion 28 may have quadrilateral, hexagonal or non-circular polygonal cross sections.

The screw 20 further includes a continuous first thread 38 and a continuous second thread 40. The first thread 38 is spirally developed on an outer circumference of the shank 22 and extends to a top end of the straight rod portion 28 from the tip 30 of the screw-in portion 26. The second thread 40 is spirally developed on the outer circumference of the shank 22 and also extends to the top end of the straight rod portion 28 from the tip 30 of the screw-in portion 26. The first thread 38 includes a plurality of first thread convolutions 42, and the second thread 40 includes a plurality of second thread convolutions 44 spaced from and opposite to the first thread convolutions 42 of the first thread 38. The pitch of two adjacent second thread convolutions 44 is almost equal to the pitch of two adjacent first thread convolutions 42. In this embodiment, the first thread convolution 42 and the second thread convolution 44 have an almost identical thread height.

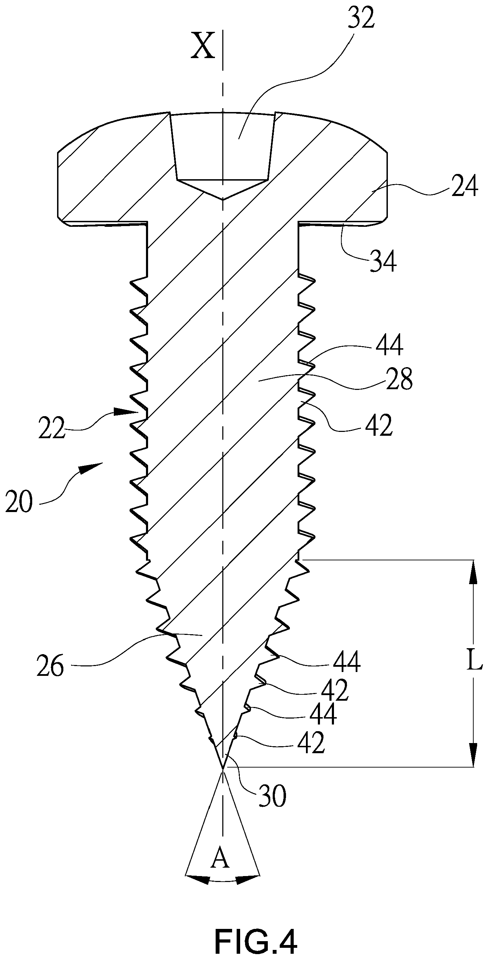

As shown in FIG. 4, the tapered screw-in portion 26 of the screw 20 features the elongated longitudinal length (L) and intensive thread convolutions 42, 44. According to the invention, the screw-in portion 26 is provided with at least five thread convolutions 42, 44 thereon. In this embodiment, the screw-in portion 26 is provided with seven thread convolutions 42, 44 thereon. In the first and second thread convolutions 42 and 44, the pitch (P) of two adjacent thread convolutions is defined to be between 0.68 and 0.72mm or at 0.7mm preferably. Accordingly, an iron sheet (for example, a thin iron sheet with a thickness less than 1mm) in which the screw-in portion 26 is being driven will be gradually drilled by the screw 20 without a fracture on the iron sheet. Furthermore, in the first and second thread convolutions 42 and 44, each thread convolution has a crest angle (C) defined to be between 48 and 52 degrees or at 50 degrees preferably. Accordingly, a thin iron sheet in which the first and second threads 38 and 40 are being driven sustains least radial stress without a fracture on the iron sheet.

In practice, based on the tip 30 of the screw-in portion 26 as an anchor point, the screw 20 is inserted into an article like a thin iron sheet and driven to be rotated by a tool (not shown in figures) accommodated in the socket 32 in the head 24 such that the first and second threads 38 and 40 on the screw-in portion 26 are driven into the thin iron sheet in which a hole with matched internal threads inside is drilled. Then, when the first and second threads 38 and 40 of the straight rod portion 28 are driven into the thin iron sheet, a full contact between the first and second threads 38 and 40 and the thin iron sheet is not available because of the triangular cross sections of the straight rod portion 28 for less fractional resistance during the screw-in process. Moreover, the thin iron sheet is securely fixed by the screw 20 relying on high fastening force which is applied on the thin iron sheet by thread crests of all thread convolutions of the first and second thread convolutions 42 and 44 for no shaking.

The screw 20 of the present invention has following advantages:
1. The screw-in portion 26 of the screw 20 can be smoothly driven into thin iron sheets for no fracture on the thin iron sheets but generation of fewest crevices because of an identical anchor point, that is, the tip 30 of the screw-in portion 26, shared by the dual screw threads (the first and second threads 38 and 40) on the screw-in portion 26 and a crest angle of each thread convolutions in the first and second thread convolutions 42, 44 between 48 and 52 degrees.
2. An iron sheet is gradually drilled by the screw-in portion 26 which has effective self-drilling capacity attributed to the intensive thread convolutions 42, 44 along the longitudinal length (L) of the screw-in portion 26 for no defect of fractures on the iron sheet.
3. Stronger stripping force which is generated by the first and second threads 38 and 40 distributed on the straight rod portion 28 with almost triangular cross sections contributes to strengthened fastening force applied on thin iron sheets for no article shaken by the screw 20 but fastening of the thin iron sheets.

The scope of the invention is to be indicated by the appended claims, rather than by the foregoing description, and all changes which come within the meaning of the claims are intended to be embraced therein.

## Claims

1. A screw (20) for thin iron sheets, comprising:
a shank (22) including a straight rod portion (28) and a tapered screw-in portion (26) at a front end of the straight rod portion (28), with the screw-in portion (26) having a sharp-cone cross section with a tip (30);
a first thread (38) spirally developed on an outer circumference of the shank (22) and extending to the straight rod portion (28) from the tip (30) of the screw-in portion (26), with the first thread (38) including a plurality of first thread convolutions (42); and
a second thread (40) spirally developed on the outer circumference of the shank (22) and extending to the straight rod portion (28) from the tip (30) of the screw-in portion (26), with the second thread (40) including a plurality of second thread convolutions (44) spaced from the first thread convolutions (42) of the first thread (38), wherein the first and second threads (38, 40) are spaced apart from each other and correspondingly extend to the straight rod portion (28) from the tip (30) ;
**characterized in that** the screw-in portion (26) is provided with at least five thread convolutions of the first and second thread convolutions (42, 44), and the first and second thread convolutions (42, 44) on the screw-in portion (26) have an identical thread height and **in that** the straight rod portion (28) has a substantially triangular cross section.

2. The screw according to claim 1, wherein the screw-in portion (26) features an included angle between 20 and 30 degrees.

3. The screw according to claim 2, wherein each of the first and second thread convolutions (42, 44) features a crest angle between 48 and 52 degrees.

4. The screw according to claim 1, wherein a pitch of two adjacent second thread convolutions (44) is equal to a pitch of two adjacent first thread convolutions (42), and a pitch (P) of two adjacent first and second thread convolutions (42, 44) is defined to be between 0.68 and 0.72 mm.

5. The screw according to claim 1, wherein the shank (22) further includes a head (24) formed at a top of the shank (22) and spaced from the screw-in portion (26) along a longitudinal axis (X) of the shank (22), with the straight rod portion (28) being between the head (24) and the screw-in portion (26), with the head (24) provided with a socket (32) in a top surface thereof and provided with a plurality of serrate portions (34) at a bottom thereof.

## Patentansprüche

1. Schraube (20) für dünne Eisenbleche, umfassend:
einen Schaft (22), der einen geraden Stangenteil (28) und einen sich verjüngenden Einschraubteil (26) an einem vorderen Ende des geraden Stangenteils (28) aufweist,
wobei der Einschraubteil (26) einen scharfkegeligen Querschnitt mit einer Spitze (30) hat,
ein erstes Gewinde (38), das auf einem Außenumfang des Schafts (22) spiralförmig ausgebildet ist und sich von der Spitze (30) des Einschraubteils (26) zu dem geraden Stangenteil (28) erstreckt, wobei das erste Gewinde (38) eine Vielzahl von ersten Gewindegängen (42) aufweist, und
ein zweites Gewinde (40), das auf dem Außenumfang des Schafts (22) spiralförmig ausgebildet ist und sich von der Spitze (30) des Einschraubteils (26) zu dem geraden Stangenteil (28) erstreckt, wobei das zweite Gewinde (40) eine Vielzahl von zweiten Gewindegängen (44) aufweist, die von den ersten Gewindegängen (42) des ersten Gewindes (38) beabstandet sind, wobei das erste und das zweite Gewinde (38, 40) voneinander beabstandet sind und sich entsprechend von der Spitze (30) zu dem geraden Stangenabschnitt (28) erstrecken,
**dadurch gekennzeichnet, dass** der Einschraubteil (26) mit mindestens fünf Gewindegängen der ersten und der zweiten Gewindegänge (42, 44) versehen ist und die ersten und die zweiten Gewindegänge (42, 44) an dem Einschraubteil (26) eine identische Gewindehöhe haben und dass der gerade Stangenabschnitt (28) einen im Wesentlichen dreieckigen Querschnitt hat.

2. Schraube nach Anspruch 1, wobei der Einschraubteil (26) einen Senkwinkel zwischen 20 und 30 Grad aufweist.

3. Schraube nach Anspruch 2, wobei die ersten und die zweiten Gewindegänge (42, 44) einen Gewindespitzenwinkel zwischen 48 und 52 Grad aufweisen.

4. Schraube nach Anspruch 1, wobei eine Steigung von zwei benachbarten zweiten Gewindegängen (44) gleich einer Steigung von zwei benachbarten ersten Gewindegängen (42) ist und eine Steigung (P) von zwei benachbarten ersten und zweiten Gewindegängen (42, 44) zwischen 0,68 und 0,72 mm definiert ist.

5. Schraube nach Anspruch 1, wobei der Schaft (22) ferner einen Kopf (24) aufweist, der an einer Oberseite des Schafts (22) ausgebildet und von dem Einschraubteil (26) entlang einer Längsachse (X) des Schafts (22) beabstandet ist, wobei der gerade Stangenteil (28) zwischen dem Kopf (24) und dem Einschraubteil (26) liegt, wobei der Kopf (24) in einer oberen Fläche davon mit einer Buchse (32) versehen ist und mit einer Vielzahl von sägeförmigen Abschnitten (34) an einem unteren Teil davon versehen ist.

## Revendications

1. Vis (20) pour des tôles de fer fines, comprenant :
un fût (22) comprenant une partie tige droite (28) et une partie d'entrée de vis effilée (26) au niveau d'une extrémité avant de la partie tige droite (28), la partie d'entrée de vis (26) présentant une section transversale conique pointue comportant une partie terminale (30) ;
un premier filet (38) formé en spirale sur une circonférence extérieure du fût (22) et s'étendant jusqu'à la partie tige droite (28) depuis la partie terminale (30) de la partie d'entrée de vis (26), le premier filet (38) comprenant une pluralité de spires de premier filet (42) ; et
un second filet (40) formé en spirale sur la circonférence extérieure du fût (22) et s'étendant jusqu'à la partie tige droite (28) depuis la partie terminale (30) de la partie d'entrée de vis (26), le second filet (40) comprenant une pluralité de spires de second filet (44) espacées des spires de premier filet (42) du premier filet (38), les premier et second filets (38, 40) étant espacés l'un de l'autre et s'étendant de manière correspondante jusqu'à la partie tige droite (28) depuis la partie terminale (30) ;
**caractérisée en ce que** la partie d'entrée de vis (26) est pourvue d'au moins cinq spires de filet des spires de premier filet et de second filet (42, 44), et les spires de premier filet et de second filet (42, 44) sur la partie d'entrée de vis (26) présentent une hauteur de filet identique et **en ce que** la partie tige droite (28) présente une section transversale essentiellement triangulaire.

2. Vis selon la revendication 1, dans laquelle la partie d'entrée de vis (26) présente un angle inclus compris entre 20 et 30 degrés.

3. Vis selon la revendication 2, dans laquelle chacune des spires de premier filet et de second filet (42, 44) présente un angle au sommet compris entre 48 et 52 degrés.

4. Vis selon la revendication 1, dans laquelle un pas de deux spires de second filet (44) adjacentes est égal à un pas de deux spires de premier filet (42) adjacentes, et un pas (P) de deux spires de premier filet et de second filet (42, 44) adjacentes est défini pour être compris entre 0,68 et 0,72 mm.

5. Vis selon la revendication 1, dans laquelle le fût (22) comprend en outre une tête (24) formée au niveau d'une partie supérieure du fût (22) et espacée de la partie d'entrée de vis (26) le long d'un axe longitudinal (X) du fût (22), la partie tige droite (28) étant située entre la tête (24) et la partie d'entrée de vis (26), la tête (24) étant pourvue d'une empreinte (32) dans une surface supérieure de celle-ci et pourvue d'une pluralité de parties en dents de scie (34) au niveau d'une partie inférieure de celle-ci.
